# EUROPEAN PATENT APPLICATION

(11) **EP 4 686 608 A1**
(43) Date of publication of application: **04.02.2026**
(21) Application number: 25190080.9
(22) Date of filing: 17.07.2025
(51) Int. Cl.: B60R 1/04, B60R 11/04

(54) **AUXILIARY STRUCTURE FOR VEHICLE WINDSHIELD**

(30) Priority: 01.08.2024 JP 2024125576
(71) Applicant: MAZDA MOTOR CORPORATION, Hiroshima 730-8670 (JP)
(72) Inventor: Yakushinji, Atsushi, Aki-gun, Hiroshima (JP)
(74) Representative: Lorenz Seidler Gossel Part. mbB

(57) **Abstract**

[Problem]To provide an auxiliary structure for a vehicle windshield capable of reducing a feeling of pressure given to an occupant seated on a front seat even when a total height of a vehicle 1 is suppressed to be low.

[Solution] The auxiliary structure for the vehicle windshield includes: a mirror support structure 20 supporting a rear-view mirror 5; a camera unit 31 disposed on a vehicle front side of the mirror support structure 20; an auxiliary cover 60 covering the mirror support structure 20 and the camera unit 31; and a camera wire harness 42 connected to the camera unit 31 from a vehicle rear side. The mirror support structure 20 includes a mirror support columnar portion 21 extending in a vehicle down direction from an upper end fixed to a bracket 10, the mirror support columnar portion 21 has an opening 21a penetrating along a vehicle front-rear direction, and the camera wire harness 42 is routed from a vehicle front side of the mirror support columnar portion 21 to a vehicle rear side of the mirror support columnar portion 21 through the opening 21a.

## Description

### [Technical Field]

The present invention relates to an auxiliary structure for a vehicle windshield that includes a mirror support structure for supporting a rear-view mirror and various sensors on an upper portion of vehicle windshield glass, for example.

### [Background Art]

In a vehicle such as an automobile, as a vehicle driving assistance system that assists with driving operation by a driver, for example, an advanced driver-assistance system that partially intervenes in the driving operation by the driver, or an automatic driving system that takes over the driving operation from the driver under a predetermined condition to perform automatic driving is provided.

In the vehicle including this driving assistance system, for example, as in Patent Literature 1, an auxiliary device that detects a surrounding situation of the vehicle is frequently provided on an inner surface upper portion of windshield glass.

More specifically, in Patent Literature 1, an auxiliary device is disclosed that supports a rear-view mirror and integrally covers a mirror support structure fixed to the windshield glass, a humidity sensor detecting humidity, and a camera imaging surroundings of the vehicle with a large auxiliary cover that bulges to a vehicle front side from a front end of a roof trim.

By the way, recently, there is a need for suppressing a total vehicle height to be low in order to improve merchantability of the vehicle or reduce air resistance.

However, when the total vehicle height is suppressed to be low, the auxiliary device that is provided on the upper portion of the windshield glass is positioned near an occupant's head in a vehicle up-down direction.

Thus, the auxiliary device covered with the large auxiliary cover that bulges to a vehicle front side from a front end of the roof trim as in Patent Literature 1 possibly gives the occupant, who is seated on a front seat of the vehicle, a feeling of pressure.

### [Citation List]

### [Patent Literature]

[Patent Literature 1] JP2017-71334A

### [Summary of Invention]

### [Technical Problem]

In view of the above-described problems, an object of the invention is to provide an auxiliary structure for a vehicle windshield capable of reducing a feeling of pressure given to an occupant who is seated on a front seat even when the total vehicle height is suppressed to be low.

### [Solution to Problem]

The invention is an auxiliary structure for a vehicle windshield that is fixed as an auxiliary device to an inner surface upper portion of windshield glass of a vehicle, and includes: a bracket that is fixed to an inner surface of the windshield glass; a mirror support structure that is fixed to the bracket and supports a rear-view mirror; an electronic device that is disposed on a vehicle front side of the mirror support structure and is fixed to the bracket; an auxiliary cover that is attached to the bracket and integrally covers the mirror support structure and the electronic device; and a wire harness that is connected to the electronic device from a vehicle rear side and is led out to outside of the auxiliary cover, in which the mirror support structure includes a mirror support columnar portion that extends in a vehicle down direction from an upper end fixed to the bracket, the mirror support columnar portion has an opening that is formed to penetrate along a vehicle front-rear direction, and the wire harness is routed from a vehicle front side of the mirror support columnar portion to a vehicle rear side of the mirror support columnar portion through the opening. In other words, a through hole may go through the upright mirror support columnar portion in the front-rear direction, and thus, the wire harness may go through such through hole in the mirror support columnar portion.

The bracket is a bracket in which a portion to which the mirror support structure is fixed and a portion to which the electronic device is fixed are formed as separate bodies, or a bracket in which the portion to which the mirror support structure is fixed and the portion to which the electronic device is fixed are integrally formed.

The electronic device is a sensor, such as a camera imaging a situation in front of the vehicle or a rain sensor detecting rain, an antenna performing inter-vehicular communication or communicating with an infrastructure facility around the vehicle, or the like.

According to the invention, since the wire harness, which is connected to the electronic device, is routed in a vehicle rear direction via the opening of the mirror support columnar portion, not only the wire harness can be routed substantially linearly in the plan view, but also the electronic device, the mirror support structure, and the wire harness can be disposed on the substantially straight line in the plan view along the vehicle front-rear direction.

Thus, in the auxiliary structure for the vehicle windshield, the electronic device can be disposed near the mirror support columnar portion of the mirror support structure in the vehicle front-rear direction.

Furthermore, for example, since a routing space for routing the wire harness on the outer side in the vehicle width direction of the mirror support columnar portion is unnecessary, in the auxiliary structure for the vehicle windshield, it is possible to suppress a length in the vehicle front-rear direction and a length in the vehicle width direction of the auxiliary cover.

Therefore, the auxiliary structure for the vehicle windshield can constitute the auxiliary device that is covered with the compact auxiliary cover. Thus, it is possible to reduce a feeling of pressure given to an occupant who is seated on a front seat even when a total vehicle height is suppressed to be low.

In addition, in the auxiliary structure for the vehicle windshield, substantially the same routing path of the wire harness can be adopted for a right-hand drive vehicle and a left-hand drive vehicle, for example. Thus, it is possible to facilitate design of the routing path of the wire harness and can share components among the right-hand drive vehicle and the left-hand drive vehicle.

As a preferable embodiment of the invention, at a position on a vehicle front side of the mirror support columnar portion, the wire harness may include a connector that is connected to the electronic device from a vehicle rear side, and on a vehicle rear side of the mirror support columnar portion, the auxiliary cover may include a cover rear wall portion that changes a routing direction of the wire harness in a vehicle rear direction to a vehicle up direction.

According to this configuration, since the routing direction of the wire harness, which is inserted through the opening of the mirror support columnar portion, is changed to the vehicle up direction by the cover rear wall portion, a regulation member that changes the routing direction of the wire harness does not have to be provided on the vehicle rear side of the mirror support columnar portion.

Furthermore, since the connector of the wire harness is connected to the electronic device at the position on the vehicle front side of the mirror support columnar portion, in the auxiliary structure for the vehicle windshield, it is possible to suppress the connector of the wire harness from protruding to the vehicle rear side of the mirror support columnar portion.

Thus, in the auxiliary structure for the vehicle windshield, the cover rear wall portion of the auxiliary cover can be disposed further near the mirror support columnar portion of the mirror support structure.

As a result, in the auxiliary structure for the vehicle windshield, it is possible to further suppress the length in the vehicle front-rear direction of the auxiliary cover and thus to further reduce the feeling of pressure given to the occupant who is seated on the front seat.

Advantageously, the bracket and the auxiliary cover may each be disposed at a position with a predetermined distance on a vehicle front side from a front header, to which an upper edge of the windshield glass is attached, a harness cover in a substantially concave groove shape may be provided to extend in the vehicle front-rear direction from the auxiliary cover to the front header and to accommodate the wire harness, and the harness cover may be formed in the substantially concave groove shape that is narrower than the auxiliary cover. In other words, the concave groove shaped cover may have a width in the vehicle right-left-direction that is smaller than the width of the auxiliary cover. In addition or in the alternative, the concave groove shaped cover may have a height in the vehicle up-down-direction, which is smaller than the height of the auxiliary cover.

The front header refers to a body frame member, to which an upper edge of the windshield glass is fixed.

The harness cover refers to a cover that is formed separately from the auxiliary cover, or a cover that is formed integrally with the auxiliary cover.

According to this configuration, since the narrow harness cover is located between the front header and the auxiliary cover, it is possible to form the transmission region, which enables the occupant who is seated on the front seat to visually recognize the situation in front of the vehicle, by exposing the upper portion of the windshield glass between the auxiliary cover and the front header.

As a result, compared to a case where the rear end of the auxiliary cover is located near the front header, in the auxiliary structure for the vehicle windshield, it is possible to reduce the feeling of pressure given to the occupant who is seated on the front seat and to secure a wide field of view of the occupant who is seated on the front seat.

According to another preferred embodiment of the invention, at a position on a vehicle front side of the mirror support columnar portion, the wire harness may include a connector that is connected to the electronic device from a vehicle rear side, and the mirror support columnar portion may include a pair of side wall portions that oppose each other with a predetermined distance in a vehicle width direction and forms the opening, and the pair of side wall portions may be formed in a shape having a front end that is separated in a vehicle rear direction from the electronic device from a vehicle upper side toward a vehicle lower side in a side view.

The predetermined distance means a distance of such an extent to allow the worker who holds the connector to put his/her finger in.

According to this configuration, in the side view, a distance between the front end of the mirror support columnar portion and the electronic device is increased from the vehicle upper side toward the vehicle lower side. Thus, the connector, which is connected to the electronic device, can easily be exposed.

Furthermore, the pair of side wall portions, which is separated from each other with the predetermined distance being interposed therebetween in the vehicle width direction, forms the opening of the mirror support columnar portion. Thus, compared to a case where a substantially circular opening is provided in a solid columnar mirror support columnar portion, for example, in the auxiliary structure for the vehicle windshield, it is possible to secure a large opening area of the opening in the bottom view.

In this way, in the auxiliary structure for the vehicle windshield, a work space where the worker holds and connects/disconnects the connector can be secured between the electronic device and the mirror support columnar portion. Therefore, in the auxiliary structure for the vehicle windshield, it is possible to reduce the feeling of pressure given to the occupant who is seated on the front seat without impairing assemblability of the electronic device and the wire harness.

### [Advantageous Effects of Invention]

The invention can provide the auxiliary structure for the vehicle windshield capable of reducing the feeling of pressure given to the occupant who is seated on the front seat even when the total vehicle height is suppressed to be low.

### [Brief Description of Drawings]

[FIG. 1] FIG. 1 is an external perspective view illustrating external appearance of the vicinity of an auxiliary device as viewed from the inside of a cabin.
[FIG. 2] FIG. 2 is a bottom view in which the external appearance of the vicinity of the auxiliary device is illustrated in a bottom view.
[FIG. 3] FIG. 3 is a cross-sectional view that is taken along an arrow A-A in FIG. 2.
[FIG. 4] FIG. 4 is an external perspective view illustrating the external appearance of the auxiliary device in a state where a rear-view mirror and a cover member are removed.
[FIG. 5] FIG. 5 is a plan view in which the external appearance of the auxiliary device is illustrated in a plan view.
[FIG. 6] FIG. 6 is a plan view in which the auxiliary device, from which a camera bracket is removed, in the plan view.
[FIG. 7] FIG. 7 is an external perspective view illustrating external appearance of an auxiliary cover as viewed from the inside of the cabin.
[FIG. 8] FIG. 8 is a view illustrating a step of connecting a camera wire harness to a camera unit.
[FIG. 9] FIG. 9 is a cross-sectional view of the auxiliary device that is taken along the arrow A-A.
[FIG. 10] FIG. 10 is a view illustrating a mirror support structure.
[FIG. 11] FIG. 11 is a plan view illustrating external appearance of a cover member in the plan view.
[FIG. 12] FIG. 12 is a view illustrating a relationship between the rear-view mirror and the auxiliary cover.
[FIG. 13] FIG. 13 is a plan view in which external appearance of an auxiliary device in another embodiment is illustrated in the plan view.

### [Description of Embodiments]

An embodiment of the invention will be described below with reference to the drawings.

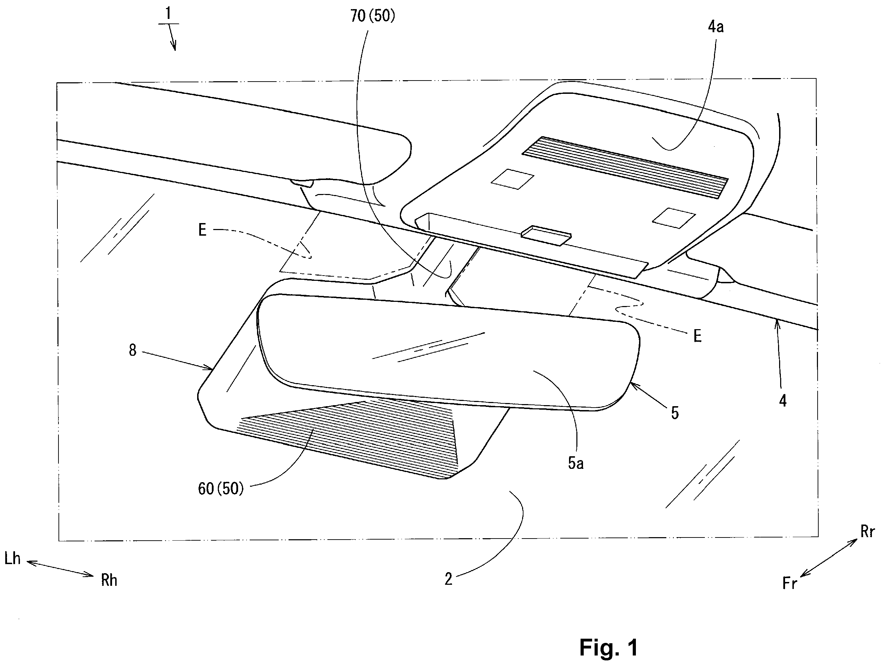

In the present embodiment, an auxiliary structure for a vehicle windshield that includes, as auxiliary devices 8, a mirror support structure 20 for supporting a rear-view mirror 5, a sensor, and the like in an upper portion of windshield glass 2 of a vehicle 1 is described with reference to FIGs. 1 to 12.

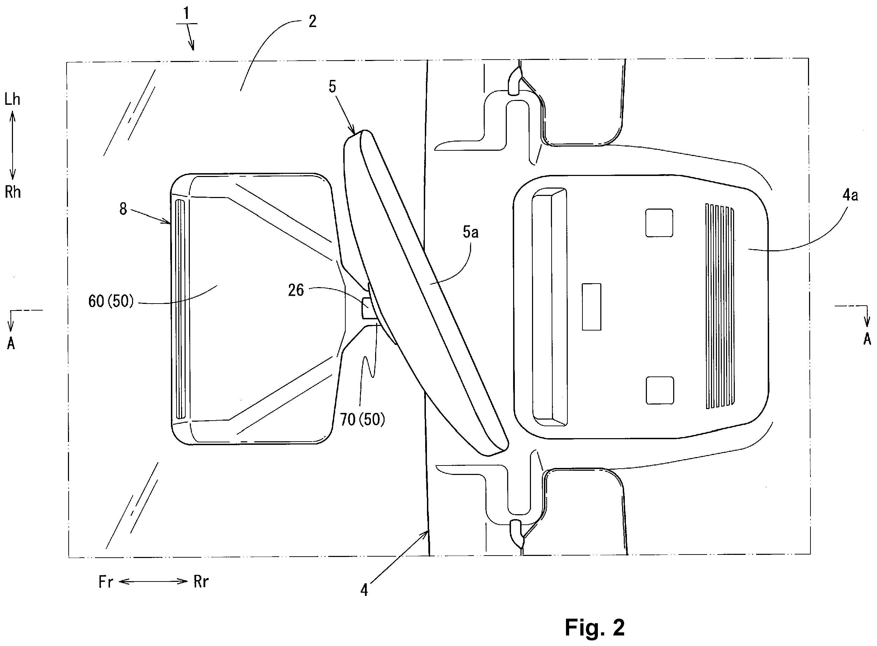

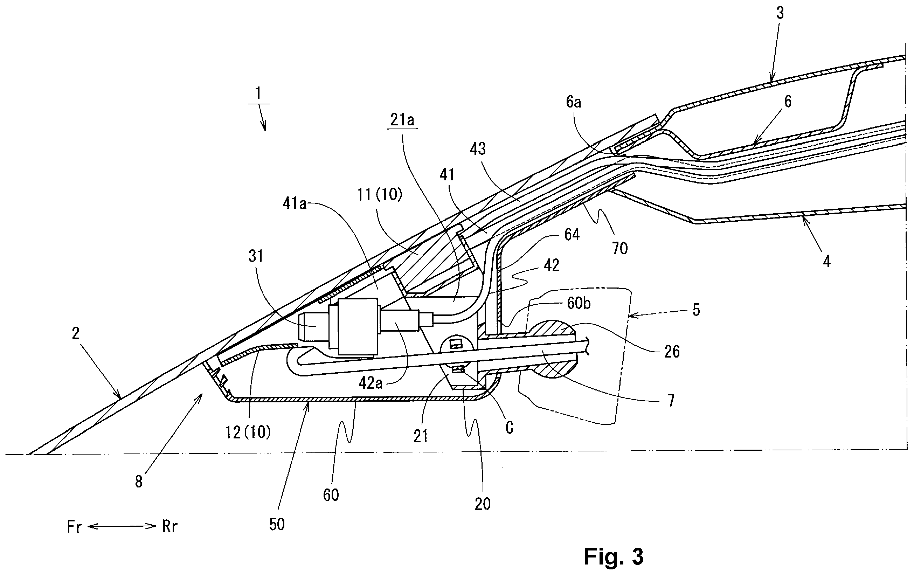

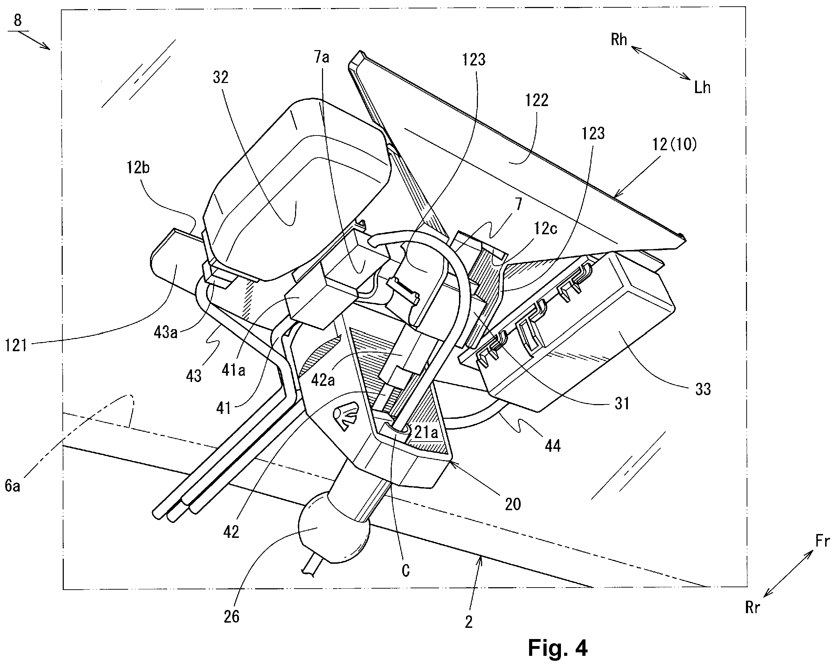

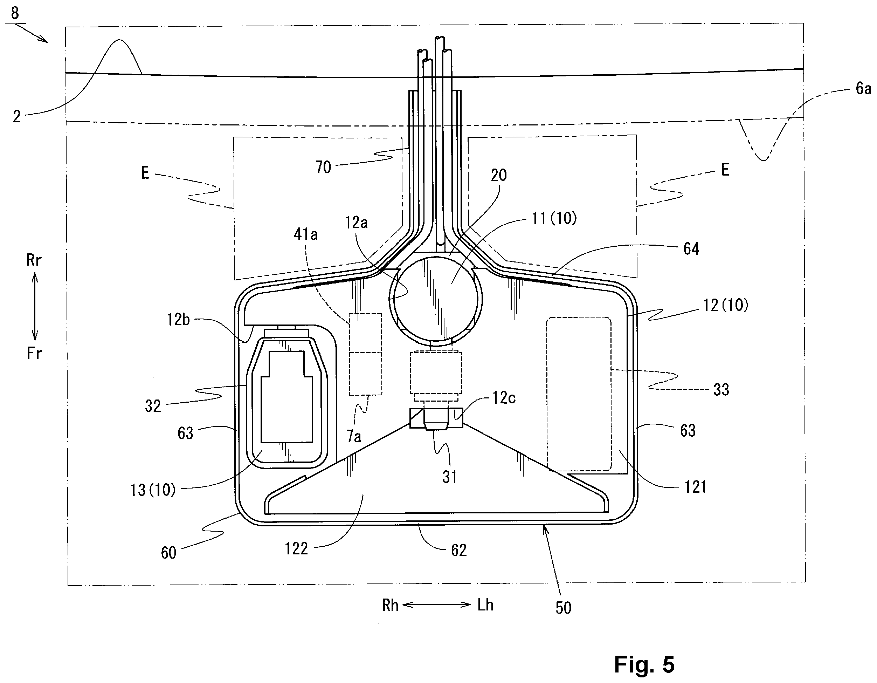

FIG. 1 is an external perspective view of the vicinity of the auxiliary device 8 as viewed from the inside of a cabin, FIG. 2 is a bottom view of the vicinity of the auxiliary device 8, FIG. 3 is a cross-sectional view that is taken along an arrow A-A in FIG. 2, FIG. 4 is an external perspective view of the auxiliary device 8 in a state where the rear-view mirror 5 and a cover member 50 are removed, and FIG. 5 is a plan view of the auxiliary device 8.

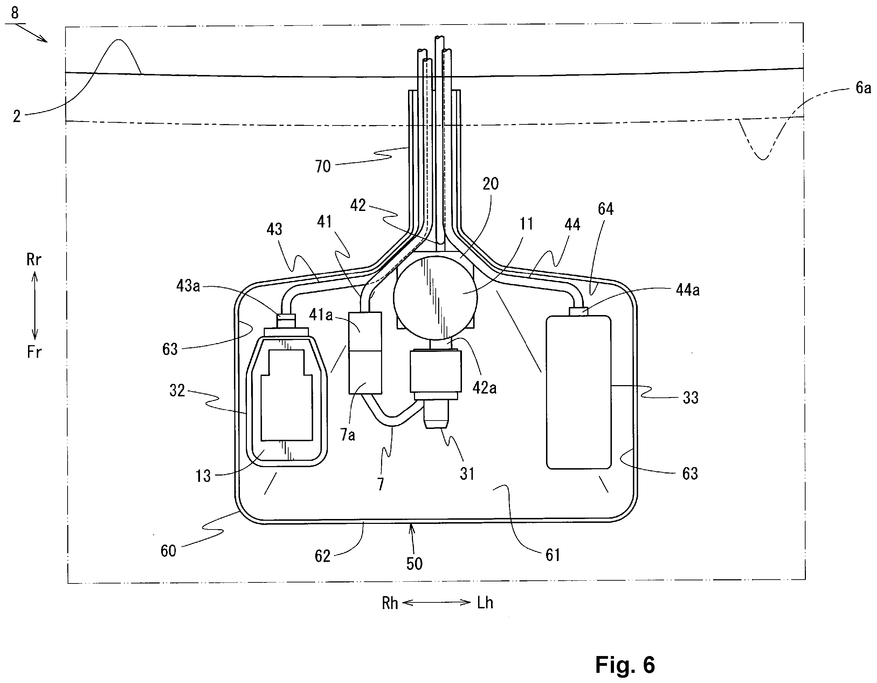

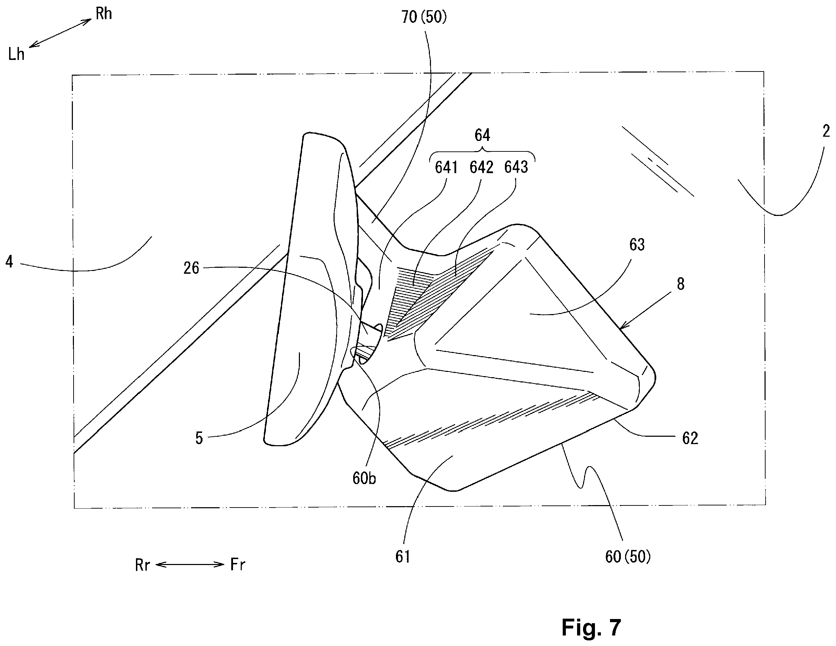

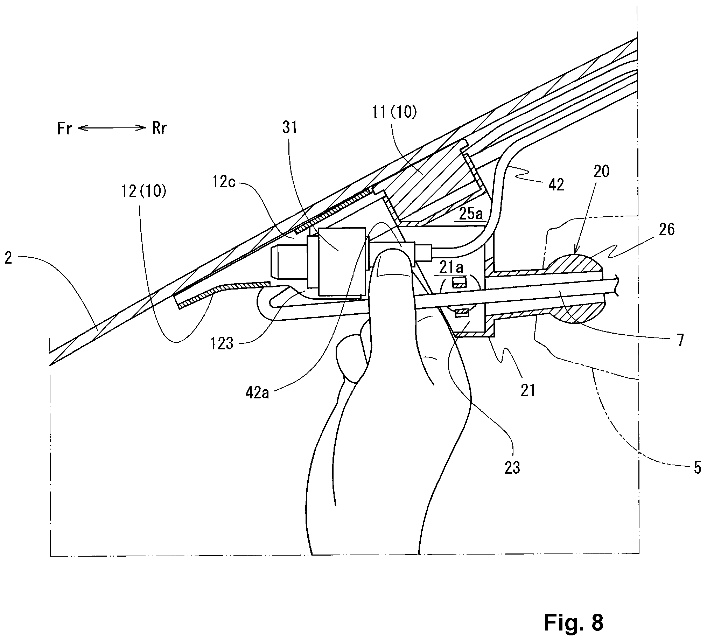

Furthermore, FIG. 6 is a plan view of the auxiliary device 8, from which a camera bracket 12 is removed, FIG. 7 is an external perspective view of an auxiliary cover 60 as viewed from inside of the cabin, and FIG. 8 is a view illustrating a step of connecting a camera wire harness 42 to a camera unit 31.

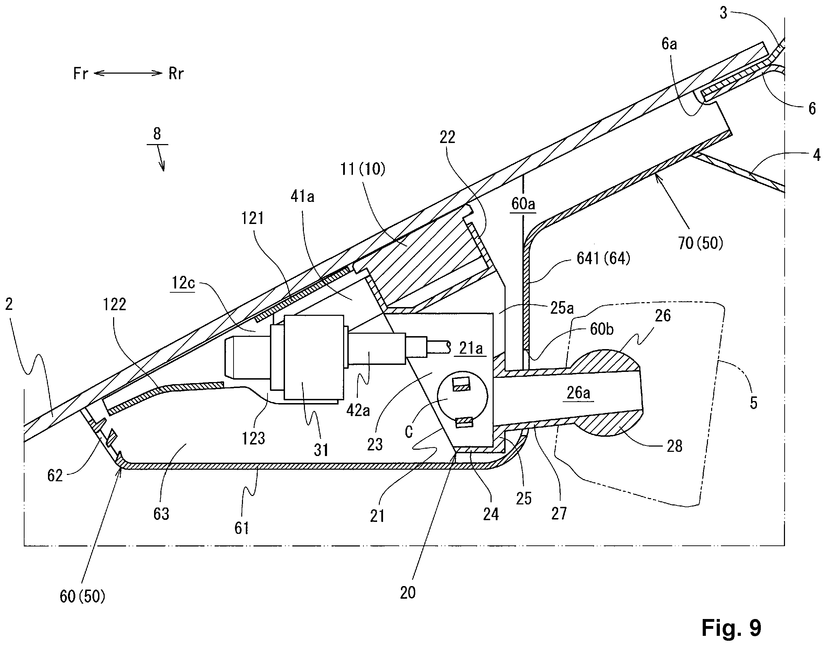

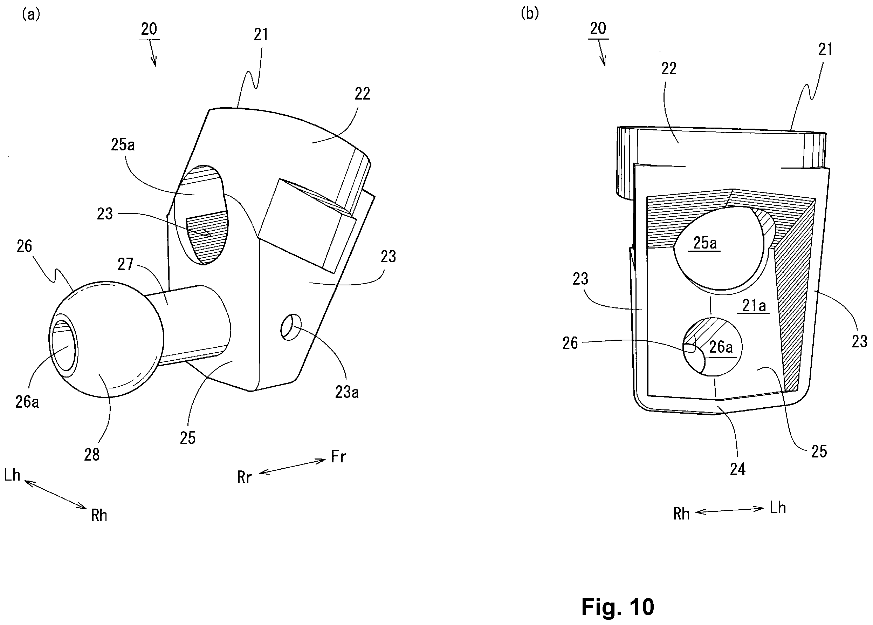

Moreover, FIG. 9 is a cross-sectional view of the auxiliary device 8 that is taken along the arrow A-A, FIG. 10 is a view illustrating the mirror support structure 20, FIG. 10(a) is an external perspective view of the mirror support structure 20 as viewed from a vehicle rear side, and FIG. 10(b) is an external perspective view of the mirror support structure 20 as viewed from a vehicle front side.

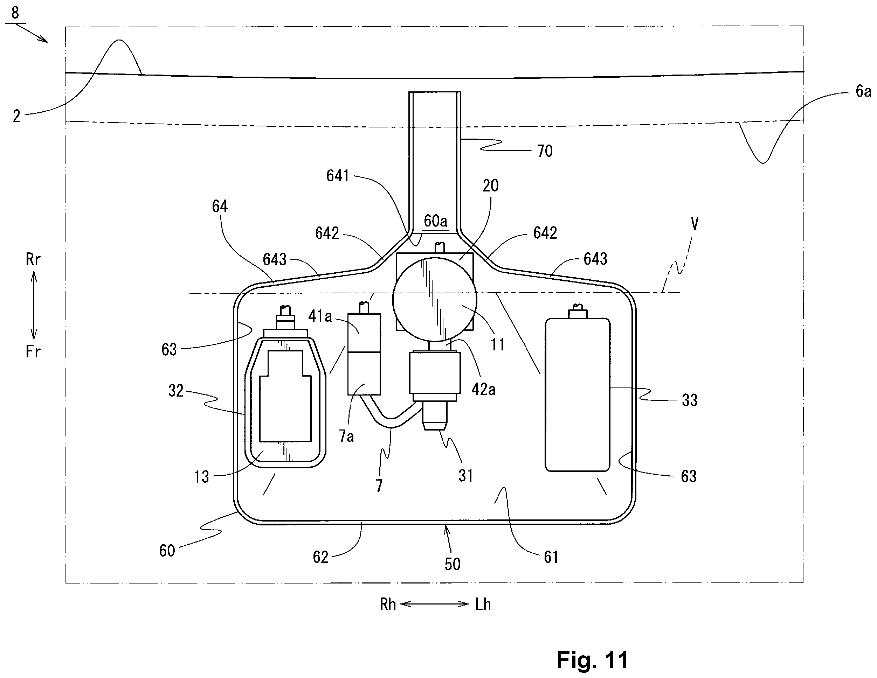

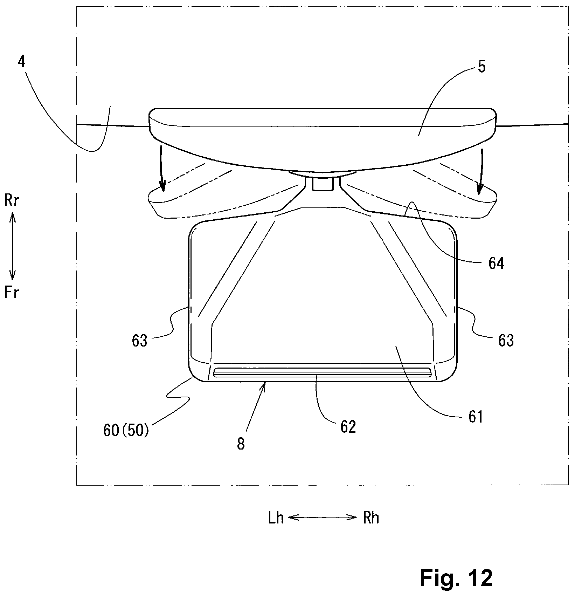

In addition, FIG. 11 is a plan view of the cover member 50, and FIG. 12 is a view illustrating a relationship between the rear-view mirror 5 and the auxiliary cover 60.

In order to clarify the illustration, the rear-view mirror 5 is illustrated by two-dot chain lines in FIGs. 3, 8, and 9. In FIGs. 4 to 6 and 11, an upper edge of the windshield glass 2 is illustrated by solid lines, and a front edge 6a of a front header 6 is illustrated by two-dot chain lines.

In addition, in order to clarify the illustration, four wire harnesses are not illustrated in FIGs. 9 and 11.

In the drawings, arrows Fr and Rr indicate a vehicle front-rear direction, the arrow Fr indicates a vehicle front direction, and the arrow Rr indicates a vehicle rear direction. Furthermore, arrows Rh and Lh indicate a vehicle width direction, the arrow Rh indicates a right direction in the vehicle width direction, and the arrow Lh indicates a left direction in the vehicle width direction.

First, the vehicle 1 in the present embodiment is a vehicle whose total height is suppressed to be low such that a front portion of a roof panel 3 (see FIG. 3) defining an external design surface is brought closer to a head of an occupant who is seated on a front seat in a vehicle up-down direction.

As illustrated in FIGs. 1 and 2, in an upper portion of a front portion of this vehicle 1, the windshield glass 2 that divides the inside of the cabin and a space in front of the vehicle, the roof panel 3 (see FIG. 3) that constitutes a roof of the vehicle 1 in a manner to continue from the windshield glass 2, a roof trim 4 that covers a ceiling of the cabin, and the rear-view mirror 5 that is supported by the windshield glass 2 via the mirror support structure 20, which will be described below are provided.

More specifically, the windshield glass 2 is so-called front windshield glass that is fixedly bonded to a body frame member of the vehicle 1.

Both ends of this windshield glass 2 in the vehicle width direction are fixedly bonded to left and right front pillars, each of which extend in the vehicle up-down direction, and a lower end thereof is fixedly bonded to a cowl panel that couples lower ends of the front pillars.

Furthermore, as illustrated in FIG. 3, an upper end of the windshield glass 2 is fixedly bonded, via the roof panel 3, to a flange portion (not denoted by a reference sign) on a vehicle front side of the front header 6 that couples upper ends of the front pillars.

Here, as illustrated in FIG. 3, the front header 6 has a substantially hat-shaped cross section in which a cross-sectional shape in a vertical cross section along the vehicle front-rear direction protrudes downward in the vehicle, and forms a closed cross section that extends in the vehicle width direction when being joined to a lower surface of the roof panel 3.

The roof trim 4 is an interior member that is provided to cover the roof panel 3 from the inside of the cabin. As illustrated in FIG. 2, in this roof trim 4, an overhead console 4a that accepts various operations by the occupant is disposed substantially near a center in the vehicle width direction.

Here, the rear-view mirror 5 is an automatic anti-glare rear-view mirror that detects light and automatically adjusts brightness thereof, and is disposed substantially at the center in the vehicle width direction. As illustrated in FIG. 2, this rear-view mirror 5 is formed in a shape that has a front surface in a substantially arcuate shape in a bottom view that protrudes forward in the vehicle and a rear surface including a substantially flat mirror surface 5a that opposes the occupant seated on the front seat.

More specifically, as illustrated in FIGs. 2 and 3, the rear-view mirror 5 is disposed to oppose a cover rear wall portion 64 of the auxiliary cover 60, which will be described below, in the vehicle front-rear direction and such that the substantial center of the mirror surface 5a in the vehicle width direction is located at substantially the same position as a front end of the roof trim 4 in the vehicle front-rear direction.

In the rear-view mirror 5, an opening, to which the mirror support structure 20 described below is fitted, is formed substantially at the center in the width direction of the front surface, and a wire harness 7 (see FIG. 3) that is led out in the vehicle front direction via the opening is provided.

Furthermore, as illustrated in FIGs. 1 and 2, the above-described vehicle 1 includes, as a part of a driving assistance system that assists with a driving operation by a driver, an auxiliary device 8 detecting a situation in front of the vehicle is provided substantially at the center in the vehicle width direction of an inner surface upper portion of the windshield glass 2.

As illustrated from FIG. 3 to FIG. 5, this auxiliary device 8 includes a bracket 10 that is fixed to the inner surface of the windshield glass 2, as well as the mirror support structure 20, the camera unit 31, a rain sensor 32, and a communication antenna 33 that are fixed to the bracket 10.

Furthermore, as illustrated in FIG. 6, the auxiliary device 8 includes four wire harnesses as well as the cover member 50 that integrally covers the bracket 10, the mirror support structure 20, the camera unit 31, the rain sensor 32, the communication antenna 33, and the four wire harnesses.

First, as illustrated in FIGs. 4 and 5, the bracket 10 is fixedly bonded to the inner surface of the windshield glass 2 by using a thermosetting adhesive such that a rear end thereof is located at a position with a predetermined distance on a vehicle front side from the front edge 6a of the front header 6.

As illustrated in FIGs. 3 and 4, the mirror support structure 20 is a support member that supports the rear-view mirror 5 with a ball joint structure. In the auxiliary device 8, this mirror support structure 20 is fixed to substantially the center in the vehicle width direction of a rear portion of the bracket 10.

The camera unit 31 includes a lens, an image sensor, and the like, and also includes, on a rear surface, a connector (not denoted by a reference sign), to which the camera wire harness 42 described below is connected. As illustrated in FIGs. 3 and 6, in the auxiliary device 8, this camera unit 31 is disposed at a position that is substantially at the center in the vehicle width direction and on the vehicle front side of the mirror support structure 20.

Furthermore, the rain sensor 32 includes an element detecting rain drops adhering to the windshield glass 2, a casing, and the like, and also includes, on a rear surface, a connector (not denoted by a reference sign), to which a sensor wire harness 43 described below is connected. As illustrated in FIG. 6, in the auxiliary device 8, this rain sensor 32 is disposed on the right side of the mirror support structure 20 in the vehicle width direction.

The communication antenna 33 is a V2X antenna, for example, and includes, on a rear surface, a connector (not denoted by a reference sign) to which an antenna wire harness 44 described below is connected. As illustrated in FIG. 6, in the auxiliary device 8, this communication antenna 33 is disposed on the left side of the mirror support structure 20 in the vehicle width direction.

As illustrated in FIGs. 4 and 6, the four wire harnesses include: a mirror wire harness 41 that is connected to the wire harness 7 led out of the rear-view mirror 5; the camera wire harness 42 that is connected to the camera unit 31; the sensor wire harness 43 that is connected to the rain sensor 32; and the antenna wire harness 44 that is connected to the communication antenna 33.

As illustrated in FIG. 6, these four wire harnesses are gathered on the vehicle rear side of the mirror support structure 20, and are routed substantially linearly in a plan view toward the vehicle lower side of the front header 6.

As illustrated in FIGs. 3, 5, and 7, the cover member 50 has a box shape that is opened to a vehicle upper side, and is substantially formed in a T shape in the plan view by a portion that is long in the vehicle width direction and has a substantially rectangular shape in the plan view and a portion that is long in the vehicle front-rear direction and has a substantially rectangular shape in the plan view.

As illustrated in FIGs. 1 and 5, in the upper portion of the windshield glass 2, such the auxiliary device 8 forms a transmission region E by exposing a portion adjacent to the front edge 6a of the front header 6 and thereby allows the occupant who is seated on the front seat to visually recognize the situation in front of the vehicle.

Next, the above-described auxiliary device 8 will further be described in detail.

As illustrated in FIG. 5, the bracket 10 includes a mirror bracket 11, to which the mirror support structure 20 is fixed, the camera bracket 12, to which the camera unit 31 and the communication antenna 33 are fixed, and a sensor bracket 13, to which the rain sensor 32 is fixed.

More specifically, as illustrated in FIG. 5, the mirror bracket 11 is fixed to a position that is located substantially at the center in the vehicle width direction in the plan view and is located with a predetermined distance on the vehicle front side from the front edge 6a of the front header 6.

As illustrated in FIGs. 3 and 5, this mirror bracket 11 is integrally formed by: a disc-shaped portion (not denoted by a reference sign) that is substantially disc-shaped and is fixedly joined to the windshield glass 2; and a substantially columnar fitted portion (not denoted by a reference sign) that has a slightly smaller diameter than the disc-shaped portion and extends in the vehicle down direction, and to which the mirror support structure 20 is fitted.

As illustrated in FIG. 5, the camera bracket 12 is formed to have an outer shape that is long in the vehicle width direction, substantially rectangular in the plan view, and is slightly smaller than an inner surface shape of the cover member 50 (the auxiliary cover 60 of the cover member 50, which will be described below).

Furthermore, as illustrated in FIG. 5, the camera bracket 12 is formed with a rear cutout portion 12a for exposing the mirror bracket 11 and a right cutout portion 12b for exposing the rain sensor 32.

As illustrated in FIG. 5, the rear cutout portion 12a is formed by cutting out a portion on the vehicle front side from a rear end of the camera bracket 12 in a substantially circular shape in the plan view that is a circle substantially coaxial with the mirror bracket 11 and has a slightly larger diameter than the mirror bracket 11.

Here, the rear cutout portion 12a is cut out such that a rear end of a body portion 121 described below is located on the vehicle rear side of a center in a radial direction of the mirror bracket 11.

As illustrated in FIG. 5, the right cutout portion 12b is formed by a range along a tip edge of the body portion 121, which will be described below, from an edge on the right side in the vehicle width direction of the camera bracket 12 in a substantially rectangular shape in the plan view that is slightly larger than the rain sensor 32.

In detail, as illustrated in FIGs. 4 and 5, the camera bracket 12 is integrally formed by the body portion 121 in a flat plate shape, to which the camera unit 31 and the communication antenna 33 are fixed, and a hood portion 122 in a substantially triangular shape in the plan view that is stepped down in the vehicle from the body portion 121.

As illustrated in FIGs. 3 and 5, the body portion 121 of the camera bracket 12 has the substantially flat plate shape along the inner surface of the windshield glass 2, and is formed with the rear cutout portion 12a for exposing the mirror bracket 11 and the right cutout portion 12b for exposing the rain sensor 32 described above.

Furthermore, although not illustrated, the lower surface of the body portion 121 is provided with: a portion that is located between the rear cutout portion 12a and the right cutout portion 12b and, to which a connector 7a of the wire harness 7 led out from the rear-view mirror 5 is locked; and a portion that is located away from an edge on the left side in the vehicle width direction with a predetermined distance on the right side in the vehicle width direction and, to which the communication antenna 33 is locked.

In addition, as illustrated in FIG. 4, on a lower surface of the body portion 121, a camera attachment portion 123 for attaching the camera unit 31, is integrally formed at a position that is located on the vehicle front side of the rear cutout portion 12a and is located on the vehicle front side with a predetermined distance from the mirror support structure 20.

This camera attachment portion 123 is a plate member that opposes in the vehicle width direction with a predetermined distance, and is formed in a shape with which the camera unit 31 is engaged.

Furthermore, as illustrated in FIG. 8, the camera attachment portion 123 is formed to hold the camera unit 31 at a position at which a space, in which a worker can hold and connect a connector 42a with his/her fingers when the worker connects the connector 42a of the camera wire harness 42 described below to the camera unit 31, can be secured with a front edge of a mirror support columnar portion 21 of the mirror support structure 20 described below.

Meanwhile, as illustrated in FIGs. 4 and 5, the hood portion 122 of the camera bracket 12 is formed by stepping down a range, which is located from a front end of the camera bracket 12 to the camera attachment portion 123, in a substantially triangular shape in the plan view in which a vertex is located on the vehicle rear side.

Furthermore, in the hood portion 122, a camera opening 12c for exposing a front end of the camera unit 31, to which the camera attachment portion 123 is attached, is formed to be opened near the vertex of the substantially triangular shape in the plan view. This camera opening 12c is formed to be opened in a substantially rectangular shape in a front view that penetrates in the vehicle front-rear direction.

As illustrated in FIG. 5, the sensor bracket 13 has substantially a plate shape along the inner surface of the windshield glass 2, and is formed in a substantially annular shape in the plan view that has an opening for exposing a central portion of the rain sensor 32 in the plan view.

Here, the sensor bracket 13 is formed in a substantially similar shape whose outer shape is slightly smaller than an outer shape of the rain sensor 32.

In addition, as illustrated in FIG. 8, the mirror support structure 20 is formed in a shape capable of securing a space, in which the connector 42a of the camera wire harness 42 is exposed and the worker can hold and connect the connector 42a of the camera wire harness 42 with his/her fingers to the camera unit 31, with a rear end of the camera unit 31.

More specifically, as illustrated in FIGs. 9 and 10(a), the mirror support structure 20 is integrally formed by: the mirror support columnar portion 21 that has a columnar body extending in the vehicle down direction from an upper end, which is fixedly fitted to the mirror bracket 11; and a mirror arm portion 26 that opposes an opening on a front surface of the rear-view mirror 5 and extends in the vehicle rear direction from a lower portion of the mirror support columnar portion 21.

As illustrated in FIG. 10, the mirror support columnar portion 21 of the mirror support structure 20 is integrally formed by a substantially cylindrical upper portion and a box-shaped lower portion, the vehicle front side of which is opened, and which has a substantially rectangular shape in the front view.

In detail, as illustrated in FIG. 10, the mirror support columnar portion 21 is integrally formed by: a substantially cylindrical fitting portion 22 that extends in the vehicle up-down direction; a pair of side wall portions 23 that extends in the vehicle down direction from both ends of the fitting portion 22 in the vehicle width direction; a bottom plate portion 24 that couples lower ends of the side wall portions 23 in the vehicle width direction; and a rear wall portion 25 that couples rear ends of the side wall portions 23 in the vehicle width direction.

As illustrated in FIG. 9, the fitting portion 22 of the mirror support columnar portion 21 has an inner circumferential surface in a shape that is fitted to an outer circumferential surface of the above-described mirror bracket 11, and is formed in a bottomed cylindrical shape in which an opening on the vehicle lower side is closed.

In addition, as illustrated in FIG. 10(b), the pair of side wall portions 23 of the mirror support columnar portion 21 each have a substantially flat plate shape that is thick in the vehicle width direction, and is formed at positions with a predetermined distance from each other in the vehicle width direction.

As illustrated in FIG. 9, in the side view, this side wall portion 23 has: a substantially vertical rear edge; and a front edge that is inclined substantially linearly such that a lower end is located on the vehicle rear side of an upper end, and is formed in a substantially inverted trapezoidal shape, in which a lower edge is a short side, in the side view.

In other words, in the side view, the side wall portion 23 is formed in the shape having the front edge that is separated in the vehicle rear direction from the camera unit 31 from the vehicle upper side toward the vehicle lower side.

Furthermore, as illustrated in FIG. 10(a), in a lower portion of the right side wall portion 23 in the vehicle width direction, a clamp attachment hole 23a that penetrates along the vehicle width direction and, to which a clamp C (see FIG. 4) for regulating a position of the wire harness 7 is attached, is opened.

As illustrated in FIG. 10(b), the bottom plate portion 24 of the mirror support columnar portion 21 has a plate shape that is thick in the up-down direction, and couples the lower ends of the side wall portions 23 in a manner to couple, in the vehicle width direction, the short sides of the substantially trapezoidal shapes of the side wall portions 23 in the side view.

As illustrated in FIGs. 9 and 10, the rear wall portion 25 of the mirror support columnar portion 21 has a plate shape that is thick in the vehicle front-rear direction, and is provided to close an opening on the vehicle rear side that is formed by the fitting portion 22, the pair of side wall portions 23, and the bottom plate portion 24.

As illustrated in FIGs. 9 and 10, in an upper portion of this rear wall portion 25, a substantially circular through hole 25a is opened to penetrate from the vehicle front side toward the vehicle rear and vehicle upper sides along a boundary with the fitting portion 22 in a manner to be provided across the fitting portion 22.

The mirror support columnar portion 21 forms an opening 21a, through which the camera wire harness 42 is inserted, by an opening that has a substantially rectangular shape in the front view and is surrounded by the fitting portion 22, the pair of side wall portions 23, and the bottom plate portion 24 and by the through hole 25a of the rear wall portion 25.

As illustrated in FIG. 3, the opening 21a of this mirror support columnar portion 21 is provided as a routing path for routing the camera wire harness 42 along the vehicle front-rear direction, and is formed as an accommodation space for accommodating a rear portion of the connector 42a of the camera wire harness 42.

Meanwhile, as illustrated in FIG. 10(a), the mirror arm portion 26 of the mirror support structure 20 extends in the vehicle rear direction from the position on the vehicle lower side of the through hole 25a of the mirror support columnar portion 21.

As illustrated in FIG. 10(a), this mirror arm portion 26 includes: a columnar portion 27 that has a substantially columnar shape and extends in the vehicle rear direction from the rear wall portion 25 of the mirror support columnar portion 21; and a spherical portion 28 that has a substantially spherical shape and is provided at a tip of the columnar portion 27.

Furthermore, as illustrated in FIG. 9, in the mirror arm portion 26, an arm portion through hole 26a that penetrates along an axial direction of the columnar portion 27 and communicates with the opening 21a of the mirror support columnar portion 21 is opened.

This arm portion through hole 26a is formed as an insertion hole, through which the wire harness 7 led out from the rear-view mirror 5 is inserted.

As illustrated in FIG. 9, at the position on the vehicle front side of the above-described mirror support structure 20, the camera unit 31 is attached to the camera attachment portion 123 of the camera bracket 12.

This camera unit 31 is connected to an electronic control unit, which is not illustrated, via the camera wire harness 42, and has a function to receive incident light transmitted through the windshield glass 2 and a function to convert the received incident light into an electric signal to be output to the electronic control unit.

Here, the electronic control unit is an information processing unit that processes various types of information and is disposed in the cabin, and is configured to generate a moving image showing the situation in front of the vehicle on the basis of the electric signal from the camera unit 31 and to execute various types of processing based on the generated moving image.

In addition, the rain sensor 32 is connected to the electronic control unit, which is not illustrated, via the sensor wire harness 43, and has a function to detect an amount of raindrops adhering to the windshield glass 2 and a function to output a signal indicating the detected amount of raindrops to the electronic control unit.

The communication antenna 33 is connected to the electronic control unit, which is not illustrated, via the antenna wire harness 44, and has a function to exchange various types of information through communication with another vehicle or with an infrastructure facility therearound.

As illustrated in FIG. 6, the rain sensor 32 and the communication antenna 33 are aligned in the vehicle width direction with the mirror support structure 20 being interposed therebetween, and are disposed such that rear ends thereof are located substantially at the same positions in the vehicle front-rear direction at the center in the vehicle front-rear direction of the mirror bracket 11.

As illustrated in FIG. 6, of the four wire harnesses, the mirror wire harness 41 is a wire harness that has, at a tip, a connector 41a connected to the wire harness 7 led out from the rear-view mirror 5.

Here, as illustrated in FIGs. 4 and 6, the wire harness 7 that is led out from the rear-view mirror 5 is led out to the vehicle front side of the mirror support structure 20 through the arm portion through hole 26a, and, on the vehicle lower side of the camera unit 31, is routed to be bent in the vehicle rear direction.

Furthermore, in the wire harness 7, which is bent in the vehicle rear direction, the connector 7a provided at the tip is locked to the camera bracket 12 at a position between the camera unit 31 and the rain sensor 32.

Meanwhile, as illustrated in FIG. 6, the mirror wire harness 41 is routed in the vehicle rear direction from the connector 41a that is connected to the connector 7a of the wire harness 7, and is then routed to the vehicle rear side of the mirror support structure 20 along the auxiliary cover 60 of the cover member 50 described below.

As illustrated in FIGs. 3 and 4, of the four wire harnesses, the camera wire harness 42 is a wire harness that has, at a tip, the connector 42a for connecting a connector (not denoted by a reference sign) of the camera unit 31.

As illustrated in FIGs. 3 and 6, this camera wire harness 42 is routed from the camera unit 31 to the vehicle rear side of the mirror support structure 20 through the opening 21a of the mirror support structure 20, and is then routed in the vehicle up direction along the auxiliary cover 60 of the cover member 50 described below.

As illustrated in FIG. 6, of the four wire harnesses, the sensor wire harness 43 is a wire harness that has, at a tip, a connector 43a connected to a connector (not denoted by a reference sign) of the rain sensor 32.

As illustrated in FIG. 6, this sensor wire harness 43 is routed in the vehicle rear direction from the rain sensor 32, and is then routed to the vehicle rear side of the mirror support structure 20 along the auxiliary cover 60 of the cover member 50 described below.

As illustrated in FIG. 6, of the four wire harnesses, the antenna wire harness 44 is a wire harness that has, at a tip, a connector 44a connected to a connector (not denoted by a reference sign) of the communication antenna 33.

As illustrated in FIG. 6, this antenna wire harness 44 is routed in the vehicle rear direction from the communication antenna 33, and is then routed to the vehicle rear side of the mirror support structure 20 along the auxiliary cover 60 of the cover member 50 described below.

Then, the four wire harnesses are gathered at the position on the vehicle rear side of the mirror support structure 20, and is routed substantially linearly in the plan view in the vehicle rear direction along the inner surface of the windshield glass 2 while the positions thereof being regulated by a harness cover 70 of the cover member 50 described below.

As illustrated in FIGs. 3 and 6, the cover member 50 is integrally formed by: the auxiliary cover 60 that integrally covers the camera unit 31, the rain sensor 32, and the communication antenna 33 fixed to the bracket 10; and the harness cover 70 that covers the four wire harnesses led out to the outside from the auxiliary cover 60.

Although not illustrated in detail, the cover member 50 is fixedly attached to the camera bracket 12 of the bracket 10.

As illustrated in FIGs. 6 and 7, the auxiliary cover 60 is a cover that has a substantially rectangular shape in the plan view and is disposed on a position with a predetermined distance in the vehicle front direction from the front edge 6a of the front header 6, and is formed in a shape that bulges in the vehicle down direction with respect to the inner surface of the windshield glass 2.

As illustrated in FIG. 6, in the rear portion of this auxiliary cover 60, a routing space for guiding the mirror wire harness 41, the sensor wire harness 43, and the antenna wire harness 44 to the vehicle rear side of the mirror support structure 20 is formed.

In detail, as illustrated in FIGs. 9 and 11, the auxiliary cover 60 is formed in a substantially box shape, the vehicle upper side of which is opened, by: a cover bottom portion 61 that has a substantially flat plate shape and, at a position with a predetermined distance in the vehicle down direction, opposes the inner surface of the windshield glass 2; a cover front wall portion 62 that extends in the vehicle up direction from an edge of the cover bottom portion 61; a pair of cover side wall portions 63; and the cover rear wall portion 64.

As illustrated in FIG. 9, the cover bottom portion 61 is a flat shape whose thickness direction is the vehicle up-down direction and that has a substantially trapezoidal shape in the plan view with a rear edge thereof being a short side, and is formed to be located at a position on the vehicle lower side of the opening on the front surface of the rear-view mirror 5.

Here, the cover bottom portion 61 is disposed such that a main surface thereof is substantially parallel to the vehicle front-rear direction.

As illustrated in FIG. 9, the cover front wall portion 62 is formed in a substantially flat plate shape that extends in the vehicle front and up directions from a front edge of the cover bottom portion 61. In this cover front wall portion 62, a plurality of slit-shaped openings (not denoted by a reference sign) that extend along the vehicle width direction are formed at predetermined intervals in the vehicle up-down direction.

As illustrated in FIGs. 7 and 11, the pair of cover side wall portions 63 extend in the vehicle up direction and to the outer side in the vehicle width direction from both edges in the vehicle width direction of the cover bottom portion 61. As illustrated in FIG. 11, this cover side wall portion 63 is formed such that a rear end thereof is located at substantially the same position in the vehicle front-rear direction as a center in the vehicle front-rear direction of the mirror bracket 11 in the plan view.

As illustrated in FIG. 9, between the front surface of the rear-view mirror 5 and the mirror support columnar portion 21 of the mirror support structure 20, the cover rear wall portion 64 extends in the vehicle up direction from the rear edge of the cover bottom portion 61 in a manner to oppose the front surface of the rear-view mirror 5.

As illustrated in FIG. 11, this cover rear wall portion 64 is formed in a shape that has a vertex substantially near the center in the vehicle width direction in the plan view and in which the vertex protrudes in the vehicle rear direction from a rear end of the cover side wall portion 63.

Accordingly, in the plan view, together with a virtual straight line V (see FIG. 11) that is parallel to the vehicle width direction passing through the rear end of the cover side wall portion 63, the cover rear wall portion 64 forms a substantially triangular space in the plan view on the rear side of the auxiliary cover 60.

Here, as illustrated in FIG. 12, the cover rear wall portion 64 protrudes in the vehicle rear direction in a manner not to overlap a swing range of the rear-view mirror 5 in the bottom view when the rear-view mirror 5 swings.

In detail, as illustrated in FIG. 11, the cover rear wall portion 64 includes: a vertex portion 641 that is the vertex of the substantially triangular shape in the plan view; and a pair of first oblique side portions 642 and a pair of second oblique side portions 643, each of which extends to the outer side in the vehicle width direction and in the vehicle front direction from both ends in the vehicle width direction of the vertex portion 641 and is oblique sides forming the substantially triangular shape in the plan view.

As illustrated in FIG. 9, the vertex portion 641 of the cover rear wall portion 64 has a flat plate shape that is thick in the vehicle front-rear direction, and is formed on the vehicle rear side to be closer to the mirror support columnar portion 21 of the mirror support structure 20 in the vertical cross section along the vehicle front-rear direction.

Furthermore, in this vertex portion 641, a lead-out hole 60a that communicates with the inside of the harness cover 70 is opened in an upper portion, and an arm portion insertion hole 60b, into which the mirror arm portion 26 of the mirror support structure 20 is inserted, is opened in a lower side.

Here, the lead-out hole 60a is formed in a size in which the four wire harnesses in a bundled state can be led out to the outside.

As illustrated in FIG. 11, in the plan view, the pair of first oblique side portions 642 of the cover rear wall portion 64 extend outward in the vehicle width direction and in the vehicle front direction from both ends of the vertex portion 641 in the vehicle width direction such that tips thereof is located near the outer side in the vehicle width direction of the mirror bracket 11.

As illustrated in FIG. 11, in the plan view, the pair of second oblique side portions 643 of the cover rear wall portion 64 extend outward in the vehicle width direction and in the vehicle front direction from the tips on the outer side in the vehicle width direction of the first oblique side portions 642, and is then coupled to the rear ends of the cover side wall portions 63.

In a clockwise direction in the plan view with the rear end of the cover side wall portion 63 being a center, the first oblique side portion 642 and the second oblique side portion 643 described above are formed such that an angle of the first oblique side portion 642 with respect to the virtual straight line V along the vehicle width direction is a larger angle than an angle of the second oblique side portion 643 with respect to the virtual straight line V along the vehicle width direction.

As illustrated in FIG. 11, on the vehicle rear side of the rain sensor 32 and the communication antenna 33, with the thus-configured cover rear wall portion 64, the auxiliary cover 60 forms the routing space for guiding the mirror wire harness 41, the sensor wire harness 43, and the antenna wire harness 44 substantially to the center in the vehicle width direction.

Meanwhile, as illustrated in FIGs. 9 and 11, the harness cover 70 of the cover member 50 is formed to have a cross section in a substantially concave groove shape that extends in the vehicle front-rear direction along the inner surface of the windshield glass 2 and whose vehicle upper side is opened.

The harness cover 70 is formed in a length in the vehicle front-rear direction from the cover rear wall portion 64 of the auxiliary cover 60 to the flange portion of the front header 6.

More specifically, the harness cover 70 is formed in the length that is narrower than a length in the vehicle width direction of the auxiliary cover 60 and that is shorted than the length in the up-down direction of the auxiliary cover 60.

As illustrated in FIGs. 6 and 11, an internal space of this harness cover 70 communicates with the lead-out hole 60a of the auxiliary cover 60, and is formed in a size capable of accommodating the four wire harnesses gathered substantially at the center in the vehicle width direction.

In this way, in the auxiliary structure for the vehicle windshield, by inserting the camera wire harness 42 through the opening 21a of the mirror support structure 20, the mirror support structure 20 and the camera unit 31 can be disposed along the vehicle front-rear direction, and the camera wire harness 42 can be routed substantially linearly in the plan view.

Furthermore, in the auxiliary structure for the vehicle windshield, the mirror wire harness 41, the sensor wire harness 43, and the antenna wire harness 44 are gathered substantially at the center in the vehicle width direction by the cover member 50, and can be routed toward the front header 6.

As it has been described so far, the auxiliary structure for the vehicle windshield in the present embodiment is a structure of the auxiliary device 8 that is fixed to the inner surface upper portion of the windshield glass 2 of the vehicle 1.

This auxiliary structure for the vehicle windshield includes: the bracket 10 that is fixed to the inner surface of the windshield glass 2; the mirror support structure 20 that is fixed to the bracket 10 and supports the rear-view mirror 5; and the camera unit 31 that is disposed on the vehicle front side of the mirror support structure 20 and is fixed to the bracket 10.

Furthermore, the auxiliary structure for the vehicle windshield includes: the auxiliary cover 60 that is attached to the bracket 10 and integrally covers the mirror support structure 20 and the camera unit 31; and the camera wire harness 42 that is connected to the camera unit 31 from the vehicle rear side and is led out to the outside of the auxiliary cover 60.

Moreover, the mirror support structure 20 includes the mirror support columnar portion 21 that extends in the vehicle down direction from the upper end fixed to the bracket 10. This mirror support columnar portion 21 is configured to include the opening 21a that is formed by penetrating along the vehicle front-rear direction.

Then, the camera wire harness 42 is configured to be routed from the vehicle front side of the mirror support columnar portion 21 to the vehicle rear side of the mirror support columnar portion 21 through the opening 21a.

According to this configuration, since the camera wire harness 42, which is connected to the camera unit 31, is routed in the vehicle rear direction via the opening 21a of the mirror support columnar portion 21, not only the camera wire harness 42 can be routed substantially linearly in the plan view, but also the camera unit 31, the mirror support structure 20, and the camera wire harness 42 can be disposed on the substantially straight line in the plan view along the vehicle front-rear direction.

Thus, in the auxiliary structure for the vehicle windshield, the camera unit 31 can be disposed near the mirror support columnar portion 21 of the mirror support structure 20 in the vehicle front-rear direction.

Furthermore, for example, since the routing space for routing the camera wire harness 42 on the outer side in the vehicle width direction of the mirror support columnar portion 21 is unnecessary, in the auxiliary structure for the vehicle windshield, it is possible to suppress the length in the vehicle front-rear direction and the length in the vehicle width direction of the auxiliary cover 60.

Therefore, the auxiliary structure for the vehicle windshield can constitute the auxiliary device 8 that is covered with the compact auxiliary cover 60. Thus, it is possible to reduce the feeling of pressure given to the occupant who is seated on the front seat even when the total height of the vehicle 1 is suppressed to be low.

In addition, in the auxiliary structure for the vehicle windshield, substantially the same routing path of the camera wire harness 42 can be adopted for a right-hand drive vehicle and a left-hand drive vehicle, for example. Thus, it is possible to facilitate design of the routing path of the camera wire harness 42 and can share the components among the right-hand drive vehicle and the left-hand drive vehicle.

The camera wire harness 42 includes the connector 42a, which is connected to the camera unit 31 from the vehicle rear side, at the position on the vehicle front side of the mirror support columnar portion 21.

Meanwhile, the auxiliary cover 60 includes the cover rear wall portion 64, which changes a routing direction of the camera wire harness 42 in the vehicle rear direction to the vehicle up direction, on the vehicle rear side of the mirror support columnar portion 21.

According to this configuration, since the routing direction of the camera wire harness 42, which is inserted through the opening 21a of the mirror support columnar portion 21, is changed to the vehicle up direction by the cover rear wall portion 64, a regulation member that changes the routing direction of the camera wire harness 42 does not have to be provided on the vehicle rear side of the mirror support columnar portion 21.

Furthermore, at the position on the vehicle front side of the mirror support columnar portion 21, the connector 42a of the camera wire harness 42 is connected to the camera unit 31. Thus, in the auxiliary structure for the vehicle windshield, the connector 42a of the camera wire harness 42 is suppressed from protruding to the vehicle rear side of the mirror support columnar portion 21.

Therefore, in the auxiliary structure for the vehicle windshield, the cover rear wall portion 64 of the auxiliary cover 60 can be disposed further near the mirror support columnar portion 21 of the mirror support structure 20.

As a result, in the auxiliary structure for the vehicle windshield, it is possible to further suppress the length in the vehicle front-rear direction of the auxiliary cover 60 and thus to further reduce the feeling of pressure given to the occupant who is seated on the front seat.

The bracket 10 and the auxiliary cover 60 are each configured to be disposed at the position with the predetermined distance on the vehicle front side from the front header 6 that is attached to the upper edge of the windshield glass 2.

Furthermore, the auxiliary structure of the vehicle windshield includes the harness cover 70 in the substantially concave groove shape that extends in the vehicle front-rear direction from the auxiliary cover 60 to the front header 6 and accommodates the camera wire harness 42.

The harness cover 70 is formed in the substantially concave groove shape that is narrower than the auxiliary cover 60.

According to this configuration, since the narrow harness cover 70 is located between the front header 6 and the auxiliary cover 60, it is possible to form the transmission region E, which enables the occupant who is seated on the front seat to visually recognize the situation in front of the vehicle, by exposing the upper portion of the windshield glass 2 between the auxiliary cover 60 and the front header 6.

As a result, compared to a case where the rear end of the auxiliary cover 60 is located near the front header 6, in the auxiliary structure for the vehicle windshield, it is possible to reduce the feeling of pressure given to the occupant who is seated on the front seat and to secure a wide field of view of the occupant who is seated on the front seat.

The camera wire harness 42 includes the connector 42a, which is connected to the camera unit 31 from the vehicle rear side, at the position on the vehicle front side of the mirror support columnar portion 21.

Furthermore, the mirror support columnar portion 21 includes the pair of side wall portions 23 that oppose each other with the predetermined distance being interposed therebetween in the vehicle width direction and form the opening 21a.

In the side view, this pair of side wall portions 23 is formed in the shape having the front edge that is separated in the vehicle rear direction from the camera unit 31 from the vehicle upper side toward the vehicle lower side.

According to this configuration, in the side view, a distance between the front end of the mirror support columnar portion 21 and the camera unit 31 is increased from the vehicle upper side toward the vehicle lower side. Thus, the connector 42a, which is connected to the camera unit 31, can easily be exposed.

Furthermore, the pair of side wall portions 23, which are separated from each other with the predetermined distance being interposed therebetween in the vehicle width direction, form the opening 21a of the mirror support columnar portion 21. Thus, compared to a case where a substantially circular opening is provided in a solid columnar mirror support columnar portion 21, for example, in the auxiliary structure for the vehicle windshield, it is possible to secure a large opening area of the opening 21a in the bottom view.

In this way, in the auxiliary structure for the vehicle windshield, a work space where the worker holds and connects/disconnects the connector 42a can be secured between the camera unit 31 and the mirror support columnar portion 21. Therefore, in the auxiliary structure for the vehicle windshield, it is possible to reduce the feeling of pressure given to the occupant who is seated on the front seat without impairing assemblability of the camera unit 31 and the camera wire harness 42.

In correspondence between the configuration in the invention and the above-described embodiment, the electronic device in the invention corresponds to the camera unit 31 in the embodiment. Hereinafter, similarly, the wire harness corresponds to the camera wire harness 42. However, the invention is not limited only to the configuration in the above-described embodiment, and many embodiments can be obtained.

For example, in the above-described embodiment, the cross-sectional shape of the front header 6 in the vertical cross section along the vehicle front-rear direction is the substantially hat-shaped cross section. However, the invention is not limited thereto, and the cross-sectional shape of the front header in the vertical cross section along the vehicle front-rear direction may be a closed cross-sectional shape.

In this case, the front header may include: a lower panel that has a substantially hat-shaped cross section and protrudes in the vehicle down direction; and an upper panel that is located on the vehicle upper side of the lower panel, has a substantially hat-shaped cross section, and protrudes in the vehicle up direction, for example.

The mirror bracket 11 and the camera bracket 12 are formed as separate bodies. However, the invention is not limited thereto, and the mirror bracket 11 and the camera bracket 12 may be integrally formed as a bracket.

The mirror bracket 11, the camera bracket 12, and the sensor bracket 13 are formed as separate bodies. However, the invention is not limited thereto, and the mirror bracket 11, the camera bracket 12, and the sensor bracket 13 may be integrally formed as a bracket.

The electronic control unit that generates the moving image showing the situation in front of the vehicle is adopted as the camera unit 31 provided separately. However, the invention is not limited thereto. In the camera unit, a control section that generates the moving image showing the situation in front of the vehicle from the electric signal based on the received incident light may integrally be provided.

It is configured that the two electronic devices, which are the rain sensor 32 and the communication antenna 33, are aligned in the vehicle width direction with the mirror support structure 20 being interposed therebetween. However, the invention is not limited thereto, and it may be configured that three or more electronic devices are aligned in the vehicle width direction with the mirror support structure 20 being interposed therebetween.

The description has been made by using the camera unit 31, the rain sensor 32, and the communication antenna 33 as the electronic devices that are fixed to the bracket 10. However, the invention is not limited thereto, and an appropriate electronic device may be used as long as the electronic device is fixed to the bracket 10. For example, the electronic device may be a Global Navigation Satellite System (GNSS) antenna that receives a GNSS signal from the GNSS, a camera unit other than the camera unit 31, or the like.

The mirror support columnar portion 21 has such a shape that the front edge of the side wall portion 23 is inclined substantially linearly. However, the invention is not limited thereto. The front edge of the side wall portion 23 may have a curved shape that protrudes in the vehicle rear direction in the side view, for example, as long as being shaped to separate in the vehicle rear direction from the camera unit 31 in the side view.

In addition to the camera bracket 12, a bracket for attaching the harness cover 70 may be provided.

The cover member 50 is formed by integrating the auxiliary cover 60 and the harness cover 70. However, the invention is not limited thereto, and such a cover member may be adopted that the auxiliary cover 60 and the harness cover 70 are formed separately.

The cover rear wall portion 64 of the auxiliary cover 60 includes: the vertex portion 641 that is substantially triangular in the plan view; and the pair of first oblique side portions 642 and the pair of second oblique side portions 643, each of which is the oblique sides forming the substantially triangular shape in the plan view. However, the invention is not limited thereto, and an appropriate shape may be adopted as long as the mirror wire harness 41, the sensor wire harness 43, and the antenna wire harness 44 can be guided substantially to the center in the vehicle width direction.

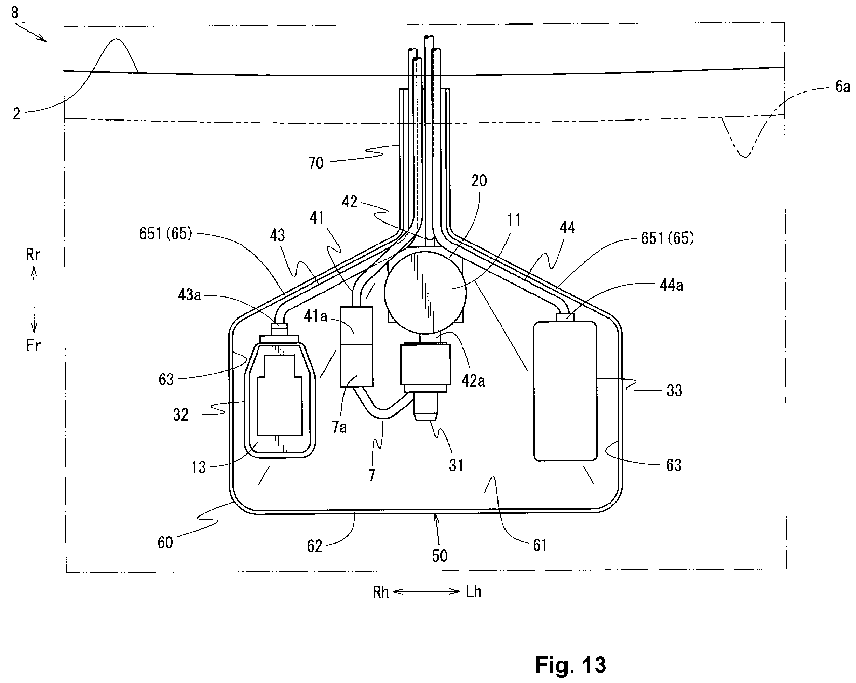

For example, as in FIG. 13 that is a plan view of the auxiliary device 8 in another embodiment, a cover rear wall portion 65 of the auxiliary cover 60 may include: a vertex portion (not illustrated) near the mirror support structure 20; and a pair of oblique side portions 651 that extend substantially linearly in the plan view from both ends in the vehicle width direction of the vertex portion to the rear end of the cover side wall portion 63.

### [Reference Signs List]

1 vehicle
2 windshield glass
5 rear-view mirror
6 front header
8 auxiliary device
10 bracket
20 mirror support structure
21 mirror support columnar portion
21a opening
23 side wall portion
31 camera unit
42 camera wire harness
42a connector
60 auxiliary cover
64, 65 cover rear wall portion
70 harness cover

## Claims

1. An auxiliary structure for a vehicle windshield that is configured to be fixed as an auxiliary device (8) to an inner surface upper portion of windshield glass (2) of a vehicle (1), the auxiliary structure for the vehicle windshield comprising:
a bracket (10) that is configured to be fixed to an inner surface of the windshield glass (2);
a mirror support structure (20) that is fixed to the bracket (10) and supports a rear-view mirror (5);
an electronic device that is disposed on a vehicle front side of the mirror support structure (20) and is fixed to the bracket (10);
an auxiliary cover (60) that is attached to the bracket (10) and covers the mirror support structure (20) and the electronic device; and
a wire harness (42) that is connected to the electronic device from a vehicle rear side and is led out to outside of the auxiliary cover (60), wherein
the mirror support structure (20) includes a mirror support columnar portion (21) that extends in a vehicle down direction from an upper end fixed to the bracket (10),
the mirror support columnar portion (21) has an opening (21a) that is formed to penetrate along a vehicle front-rear direction, and
the wire harness (42) is routed from a vehicle front side of the mirror support columnar portion (21) to a vehicle rear side of the mirror support columnar portion (21) through the opening (21a).

2. The auxiliary structure for the vehicle windshield according to claim 1, wherein
at a position on a vehicle front side of the mirror support columnar portion (21), the wire harness (42) includes a connector (42a) that is connected to the electronic device from a vehicle rear side, and
on a vehicle rear side of the mirror support columnar portion (21), the auxiliary cover (60) includes a cover rear wall portion (64, 65) that changes a routing direction of the wire harness (42) in a vehicle rear direction to a vehicle up direction.

3. The auxiliary structure for the vehicle windshield according to claim 1 or 2, wherein
the bracket (10) and the auxiliary cover (60) are each disposed at a position with a predetermined distance on a vehicle front side from a front header (6), to which an upper edge of the windshield glass (2) is attached,
a harness cover (70) in a concave groove shape is provided to extend in the vehicle front-rear direction from the auxiliary cover (60) to the front header (6)and to accommodate the wire harness (42), and
the harness cover (70) is formed in the concave groove shape that is narrower than the auxiliary cover (60).

4. The auxiliary structure for the vehicle windshield according to anyone of claims 1 to 3, wherein
in a side view, the mirror support columnar portion (21) is formed in a shape having a front edge in which a lower end is located on a vehicle rear side of an upper end.

5. The auxiliary structure for the vehicle windshield according to claim 4, wherein
at a position on a vehicle front side of the mirror support columnar portion (21), the wire harness (42) includes a connector (42a) that is connected to the electronic device from a vehicle rear side, and
the mirror support columnar portion (21) includes a pair of side wall portions (23) that oppose each other with a predetermined distance in a vehicle width direction and form the opening (21a), wherein
front ends of said pair of side wall portions (23) are spaced apart in a vehicle front-rear direction from the electronic device to form an access space between the mirror support columnar portion (21) and the electronic device, wherein said access space widens towards a lower end, and/or said front ends are sloped to extend from an upper end portion of said side wall portions (23) downwardly and rearwardly to a lower end portion of said side wall portions (23) in a side view.

6. The auxiliary structure for the vehicle windshield according to anyone of the preceding claims, wherein said mirror support structure (20) includes a mirror arm portion (26) extending from a lower end portion of said mirror support columnar portion (21) rearwardly in the vehicle front-rear direction so the mirror arm portion (26) and said mirror support columnar portion (21) together form a substantially L-shaped support structure, wherein said mirror arm portion (26) extends through a rear wall portion of the auxiliary cover (60) to the exterior of the auxiliary cover (60) to support the mirror.

7. The auxiliary structure for the vehicle windshield according to the preceding claim, wherein the mirror arm portion (26) is provided with an arm portion through hole (26a) that penetrates along an axial direction of a columnar portion (27) of the mirror arm portion (26) and is formed as an insertion hole, through which a wire harness (7) led out from the rear-view mirror (5) is inserted.

8. The auxiliary structure for the vehicle windshield according to the preceding claim, wherein said arm portion through hole (26a) communicates with the opening (21a) in the mirror support columnar portion (21) of the mirror support structure (20).

9. The auxiliary structure for the vehicle windshield according to anyone of the preceding claims, wherein the mirror is positioned rearwardly and spaced apart from a main portion of the auxiliary cover (60) and/or the entire auxiliary cover (60) is positioned forwardly to the mirror so in the vehicle up-down direction there is no overlap between the mirror and the auxiliary cover (60).

10. The auxiliary structure for the vehicle windshield according to anyone of the preceding claims, wherein, in a side view in the vehicle width direction, an angle between a top wall of the auxiliary structure to be attached to the windshield and a bottom wall of the auxiliary device (8) is less than 35° or less than 25°.

11. A vehicle (1) comprising the auxiliary structure according to anyone of the preceding claims.
